# EUROPEAN PATENT SPECIFICATION

(11) **EP 2 027 916 B1**
(45) Date of publication and mention of the grant of the patent: **24.04.2019**
(21) Application number: 06833830.0
(22) Date of filing: 30.11.2006
(51) Int. Cl.: B01J 19/18, C09C 1/56, H01M 4/62, H01M 4/485, H01M 4/13, H01M 4/587, B82Y 30/00, H01G 11/32, H01G 11/46, H01M 4/36

(54) **REACTION METHOD, METAL OXIDE NANOPARTICLES OR CARBON CARRYING THE NANOPARTICLES, OBTAINED BY THE METHOD, ELECTRODES CONTAINING THE CARBON, AND ELECTROCHEMICAL DEVICES WITH THE ELECTRODES**
UMSETZUNGSVERFAHREN, DANACH ERHALTENE METALLOXIDNANOPARTIKEL ODER DANACH ERHALTENER, DIE NANOPARTIKEL TRAGENDER KOHLENSTOFF, DEN KOHLENSTOFF ENTHALTENDE ELEKTRODEN UND ELEKTROCHEMISCHE VORRICHTUNGEN MIT DEN ELEKTRODEN
PROCEDE DE REACTION, NANOPARTICULES D'OXYDE METALLIQUE OU CHARBON SUPPORTANT LES NANOPARTICULES OBTENUS SELON LE PROCEDE, ELECTRODES CONTENANT LE CHARBON ET DISPOSITIFS ELECTROCHIMIQUES CONTENANT LES ELECTRODES

(30) Priority: 09.12.2005 JP 2005356845
(43) Date of publication of application: 25.02.2009
(73) Proprietor: NIPPON CHEMI-CON CORPORATION, Tokyo 141-8605 (JP)
(72) Inventor: NAOI, Katsuhiko, Kunitachi-shi, Tokyo 186-0002 (JP); OGIHARA, Nobuhiro, Kunitachi-shi, Tokyo 186-0002 (JP); ISHIMOTO, Shuichi, Tokyo 141-8605 (JP)
(74) Representative: Lusuardi, Werther
(86) International application number: PCT/JP2006/324027
(87) International publication number: WO 2007/066581

(56) References cited:
- WO-A1-03/081331
- JP-A- 11 347 388
- JP-A- 2000 123 876
- JP-A- 2005 129 507
- JP-A- 2005 169 315
- US-A- 3 194 540

## Description

The present invention relates to a reaction method according to the preamble of claim 1.

Conventionally, reaction methods have been recognized in which insoluble products including metal oxide and metal hydroxide are produced in liquid-phase chemical reactions such as hydrolysis reaction, oxidation reaction, polymerization reaction, condensation reaction. The most typical of such reaction method is the sol-gel method. However, the sol-gel method is so slow in reaction speed due to the reliance of the method on hydrolysis reaction, polycondensation reaction and so on of metallic salt, that no uniform products can be obtained. An example of the known method to solve the problem is the one in which a catalyst is used to accelerate the reaction. Other such examples include a method in which a highly reactive reactant is used (Japanese Laid-open Patent Publication No. H8-239225) and a method in which the agitation process is improved (Japanese Laid-open Patent Publication No. H11-60248. Still other such examples include a method in which a hydroxide metallic hydrate produced by such a liquid-phase chemical reaction is used as an electric energy-storing element (Japanese Laid-open Patent Publication No. 2000-36441).

From JP 2000-123876 a chemical reaction is known with a complex-treatment which, however, is not carried out in liquid phase.

From JP 2005-169315 a further chemical reaction is known which, however, is not a liquid phase reaction.

JP 2005-129507 discloses a molding method for a mixture of a binder and graphite powder and carbon particles adhering on the surface of the graphite powder. There is mention, however, that the method would be a chemical reaction, rather it appears that the reaction disclosed in this document is a purely mechanical/physical one and even less of a chemical reaction carried out in liquid phase.

However, there remained a problem that such methods could not achieve an accelerated chemical reaction and that hence no uniform products could be obtained. Another remaining problem was that a nanoparticle preferable as an electric energy-storing element could not be produced.

### SUMMARY OF THE INVENTION

It is thus an object of the present invention to provide a method for accelerating a reaction in a liquid-phase chemical reaction to an unprecedented speed. The reaction method according to the present invention is characterized in that a chemical reaction is accelerated by applying shear stress and centrifugal force to a metal salt and carbon (the reactant) in a rotating reactor in the course of the chemical reaction. In the inventive reaction method, it is supposed that mechanical energies of both shear stress and centrifugal force are applied to a reactant at the same time, and that hence the mechanical energies are converted into chemical energies, resulting in acceleration of chemical reaction to an unprecedented speed.

Further, the reaction produces a thin film containing the reactant in a rotating reactor, and shear stress and centrifugal force are applied to the thin film, whereby great shear stress and centrifugal force are applied to the reactant contained in the thin film, resulting in further acceleration of the chemical reaction.

Acceleration of such a chemical reaction can be achieved by causing, in a reactor, the reactant in the inner tube to pass, by means of the centrifugal force generated from the rotation of the inner tube, through the through-holes to the inside wall of the outer tube so that a thin film containing the reactant is produced on the inside wall of the outer tube, and by applying shear stress and centrifugal force to the thin film, wherein the reactor comprises a pair of outer and inner concentric tubes, the inner tube having through-holes provided on the side thereof, and the outer tube having an end plate at the opening thereof.

When the thin film is 5 mm or less in thickness, the effect of the reaction method according to the present invention can be enhanced.

When the centrifugal force to be applied to the reactant inside the inner tube of the reactor is 1500 N (kgms⁻²) or greater, the effect of the reaction method according to the present invention can be enhanced.

Such a chemical reaction according to the present invention is applied to a hydrolysis reaction or a condensation reaction of metallic salt using a solvent.

A metal oxide nanoparticle is formed by the above-described chemical reaction.

Further, the carbon according to the present invention is characterized in that the carbon is one that carries a metal oxide nanoparticle in a highly dispersed state, the carbon comprising: a metal oxide nanoparticle produced by applying shear stress and centrifugal force to a reactant in a rotating reactor in the course of the chemical reaction; and a carbon dispersed by applying shear stress and centrifugal force in a rotating reactor.

The carbon that carries a metal oxide nanoparticle in a highly dispersed state is formed in the following manner: as a metal oxide nanoparticle is produced, the metal oxide nanoparticle and carbon are uniformly dispersed; and upon completion of the reaction, a metal oxide nanoparticle is carried on the surface of the carbon in a highly dispersed state.

The carbon can be prepared by the reaction method according to the present invention: namely, causing the reactant and carbon to react and disperse at the same time where the reactant and carbon are mixed.

This carbon can be used as an electrode material for an electrochemical device. The electrode is nanomized and the specific surface area thereof is remarkably extended, so that the output characteristics of the electrode are enhanced when used as a lithium ion-storing electrode, while the capacity characteristics of the electrode are enhanced when used as a proton-storing electrode.

Hence, use of the electrode enables attainment of an electrochemical device having high output and high capacity characteristics.

As discussed above, in the chemical reaction method according to the present invention, it is supposed that both shear stress and centrifugal force are applied to a reactant at the same time, and that hence such mechanical energies are converted into chemical energies necessary for the reaction, resulting in acceleration of chemical reaction to an unprecedented speed. Application of the method to the hydrolysis or condensation reactions of metallic salt allows for instantaneous progress of the reaction, leading to production of a metal oxide nanoparticle.

Further, carbon that carries a metal oxide nanoparticle in a highly dispersed state can be obtained by placing carbon into the reactant in the course of the chemical reaction, and an electrochemical device having high output and high capacity characteristics can be obtained by using the carbon as an electrode.

### BRIEF DESCRIPTION OF THE DRAWINGS

FIG. 1 is an example of a reactor used in the reaction according to the present invention.
FIG. 2 is a TEM image of a Ketjen black that carries a titanium oxide nanoparticle obtained in Working Example 1 in a highly dispersed state.
FIG. 3 is a TEM image of a carbon nanotube that carries a ruthenium oxide nanoparticle obtained in Working Example 3 in a highly dispersed state.
FIG. 4 shows the Charge/Discharge behavior of Working Examples 1 and 2.
FIG. 5 shows the rate characteristics in Working Examples 1 and 2 and Comparative Example.

### DESCRIPTION OF THE PREFERRED EMBODIMENTS

The present invention will now be described in more detail.

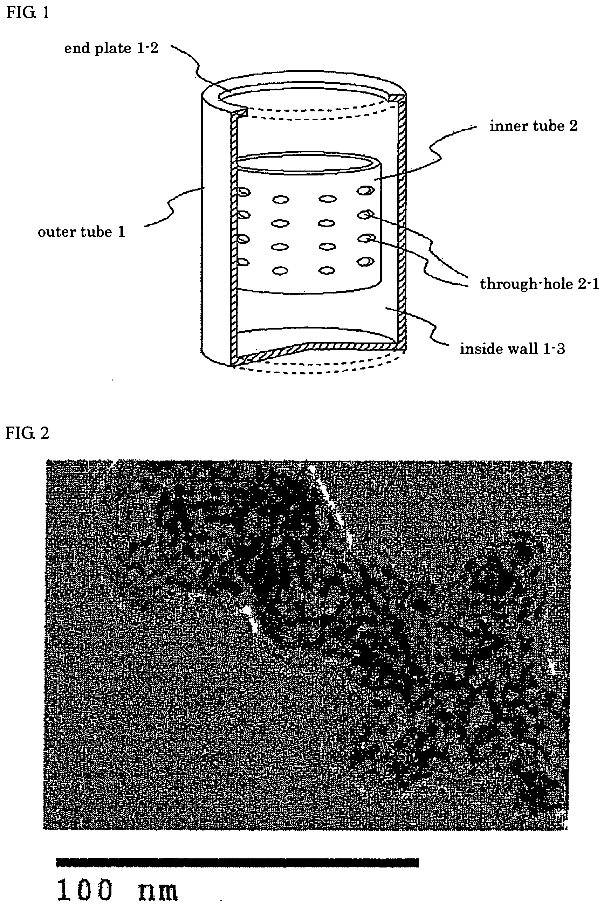

The method for chemical reaction according to the present invention can be carried out using a reactor, for example, one as shown in FIG. 1. As depicted in FIG. 1, the reactor comprises an outer tube 1 that has at an opening thereof an end plate 1-2, and an inner tube 2 that has through holes 2-1 and rotates. A reactant is placed inside the inner tube of the reactor, and the inner tube is caused to rotate. The centrifugal force caused by the rotation makes the reactant inside the inner tube pass through the through-holes to the inside wall 1-3 of the outer tube. The reactant collides against the inner wall of the outer tube by means of the centrifugal force caused by the inner tube, so that the reactant takes a thin-film shape and rides up toward the upper portion of the inner wall. In this condition, the reactant receives both the shear stress thereof against the inner wall and the centrifugal force from the inner tube at the same time, causing great mechanical energies to be applied to the thin film-shaped reactant. The mechanical energies are supposed to convert into chemical energies necessary for the reaction, or so-called activation energies, resulting in instantaneous progress of the reaction.

In this reaction, the mechanical energies applied to the thin film-shaped reactant are too great, and thus the thin film should be 5 mm or less in thickness, preferably 2.5 mm or less, more preferably 1.0 mm or less. Meanwhile, the thickness of the thin film can be arranged in accordance with the width of the end plate and the amount of the reaction liquid.

Further, the reaction method according to the present invention is supposed to be achieved by means of the mechanical energies of shear stress and centrifugal force applied to the reactant, with the shear stress and the centrifugal force being generated by the centrifugal force applied to the reactant inside the inner tube. Hence, the centrifugal force to be applied to the reactant inside the inner tube necessary for the present invention is 1500 N (kgms⁻²) or greater, preferably 70000 N(kgms⁻²), more preferably, 270000 N(kgms⁻²) or greater.

In particular, the above-described reaction method is applied to the production of metal oxide by way of the hydrolysis or condensation reactions of metallic salt, which production has been conventionally performed in the sol-gel method, then a uniform metal oxide nanoparticle can be formed.

Examples of metal of metal oxide include Li, Al, Si, P, B, Ti, V, Cr, Mn, Fe, Co, Ni, Cu, Zn, Nb, Mo, Ru, Pb, Ag, Cd, In, Sn, Sb, W and Ce. Examples of oxide include MₓO_{z}, AₓM_{y}O_{z}, Mₓ(DO₄)_{y}, AₓM_{y}(DO₄)_{z} (where M is metallic element, A is alkaline metal or lanthanoid element, and D is Be, B, Si, P, Ge and so on) and solid solution thereof.

Each of these metal oxide nanoparticles operates as an active material preferable for an electrode for an electrochemical device. Namely, the nanoparticulation causes the specific surface area of the electrode remarkably extended, whereby the output characteristics and the capacity characteristics thereof are enhanced.

Further, in such a chemical reaction of producing metal oxide by way of the hydrolysis or condensation reactions of metallic salt, addition of carbon in the course of the reaction enables acquisition of carbon that carries a metal oxide nanoparticle in a highly dispersed state. Namely, metallic salt and carbon are placed inside the inner tube of the reactor as shown in FIG. 1, and the inner tube is rotated to mix and disperse the metallic salt and carbon. Besides, while rotating the inner tube, a catalyst such as sodium hydroxide may be added so that the hydrolysis or condensation reactions proceed to produce a metal oxide, mixing the metal oxide and the carbon in a dispersion state. Upon completion of the reaction, carbon that carries a metal oxide nanoparticle in a highly dispersed state can be formed.

Examples of carbon used here include carbon black such as Ketjen black and acetylene black, carbon nanotube, carbon nanohorn, amorphous carbon, carbon fiber, natural graphite, artificial graphite, activated carbon and mesoporous carbon, and a composite material thereof.

The carbon that carries the above-described metal oxide nanoparticle in a highly dispersed state can be optionally calcined, kneaded with a binder and formed, so that the carbon can serve as an electrode of an electrochemical device, namely, an electric energy-storing electrode, the electrode showing high output characteristics and high capacity characteristics.

Examples of the electrochemical device to which the electrode can be applied include an electrochemical capacitor and a battery that employ an electrolytic solution containing lithium ion, and an electrochemical capacitor and a battery that employ an aqueous solution. In other words, the electrode according to the present invention is configured for redox reaction of lithium ion and proton. Further, the electrode according to the present invention can operate as either negative or positive electrode depending on the selection of counter electrodes having different metal species and oxidation-reduction potentials. Hence, an electrochemical capacitor and a battery can be comprised by using an electrolytic solution containing lithium ion or an aqueous electrolytic solution, and by using, as a counter electrode, an activated carbon, a carbon that redox-reacts with lithium, a macromolecule that redox-reacts with proton, and a metal oxide that redox-reacts with lithium or proton.

The present invention will now be described in more detail with reference to Working Examples.

### (Working Example 1)

40 ml of isopropyl alcohol, 1.25g of titanium tetrabutoxide and 1 g of Ketjen black (made by Ketjen Black International Co., Ltd., Product Name: Ketjen black EC600JD, Porosity: 78 Vol.%, Primary Particle Size: 40 nm, Average Secondary Particle Size: 337.8 nm) were added into a rotating reactor, and were agitated in the reactor. Then, 1 g of water was placed into the reactor, and the internal tube was rotated at the centrifugal force of 66,000 N (kgms⁻²) for 10 minutes, so that a thin film of the reactant was formed on the internal wall of the outer tube, and that shear stress and centrifugal force were applied to the reactant for accelerated chemical reaction, whereby a Ketjen black that carried an titanium oxide nanoparticle in a highly dispersed state was obtained.

The obtained Ketjen black that carried the titanium oxide nanoparticle in a highly dispersed state was filtered through a filter folder, and was dried at 100 C° for 6 hours, whereby a structure was obtained in which a nanoparticle of titanium oxide was carried on the internal surface of the Ketjen black in a highly dispersed state. FIG. 2 illustrates the TEM image of this structure. It can be seen from FIG. 2 that a titanium oxide nanoparticle of 1 to 10 nm in size was carried on the Ketjen black in a highly dispersed state.

### (Working Example 2)

1 g of carbon nanotube (made by JEMCO Inc.) was used instead of the Ketjen black, and then, a carbon nanotube that carried a titanium oxide nanoparticle in a highly dispersed state was obtained in a manner similar to Working Example 1. The primary particle size of the titanium oxide nanoparticle was 1 to 10 nm.

### (Working Example 3)

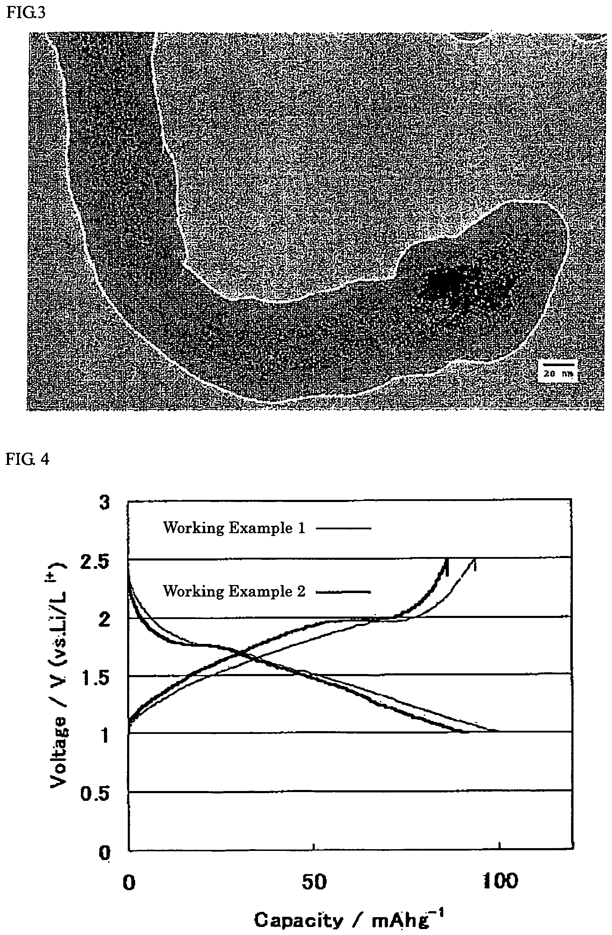

40 ml of water, 1.965 g of ruthenium chloride and 1 g of carbon nanotube (made by JEMCO Inc.) were used instead of isopropyl alcohol, titanium tetrabutoxide and Ketjen black, and then, a carbon nanotube that carried a ruthenium oxide nanoparticle in a highly dispersed state was obtained in a manner similar to Working Example 1. FIG. 3 illustrates the TEM image of this structure. It can be seen from FIG. 3 that a ruthenium oxide nanoparticle of 1 to 10 nm in size was carried on the Ketjen black in a highly dispersed state.

### (Comparative Example)

Taking the conventional sol-gel method, and without taking the inventive chemical reaction, a Ketjen black that carried an titanium oxide particle was obtained in a manner similar to Working Example 1. The primary particle size of the titanium oxide particle was 10 to 50 nm.

The results evidently show that, in Comparative Example, the particle grew to 10 to 50 nm in size at the time of reaction completion, while in Working Examples, the particle grew to 1 to 10 nm in size at the time of reaction completion, and that hence the reaction method according to the present invention could achieve the acceleration of liquid-phase chemical reaction to an unprecedented speed.

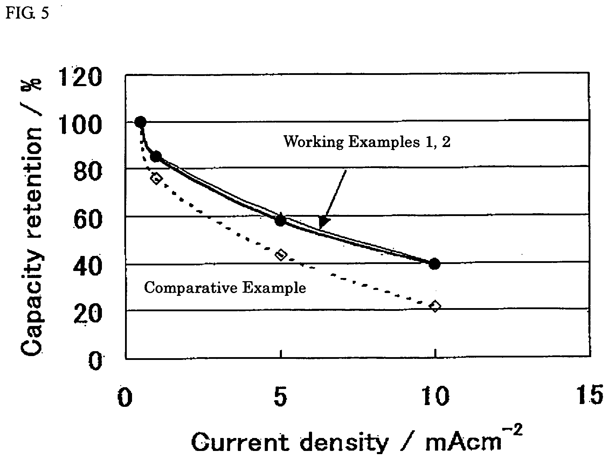

A heat treatment was carried out with respect to the samples obtained in Working Examples 1 and 2 and Comparative Example at 400 C° for 12 hours in the nitrogen atmosphere. The heat-treated samples were mixed with a binder, formed, and then fixed by applying pressure onto an SUS mesh so that the samples were shaped into electrodes. After vacuum drying the electrodes, a cell was fabricated using metallic lithium as the counter electrode, together with 1MLiPF6/EC-DEC (1:1vol. %) as an electrolytic solution, and then, the Charge/Discharge behavior and the rate characteristics were studied. The results are shown in FIGS. 4 and 5.

According to FIG. 4, the electrodes used in Working Examples 1 and 2 had a plateau in the proximity of 1.75 to 2.0 V. This shows that the electrodes were configured for oxidation reduction of the Ti(III) to Ti(IV) state, and that they could operate as energy-storing oxide combined electrodes for electrochemical devices.

According to FIG. 5, the electrodes used in Working Examples 1 and 2 show a capacity retention rate higher than those used in Comparative Example 1, thus the former are more effective as electrodes for high output electrochemical devices.

## Claims

1. A reaction method for accelerating a chemical reaction in the liquid-phase, wherein mechanical energies of both shear stress and centrifugal force are applied to a metal salt and carbon in a rotating reactor at the same time in the course of the chemical reaction, and
the mechanical energies are converted into chemical energies, resulting in acceleration of the chemical reaction,
for dispersing the carbon and metal oxide nanoparticles produced in the chemical reaction;
the carbon produced carries the metal oxide nanoparticles in a highly dispersed state and is operated as an electrode, and wherein the chemical reaction is a hydrolysis reaction or a condensation reaction of metallic salt in a solvent.

2. The reaction method according to claim 1 for accelerating the chemical reaction, wherein a thin film containing a reactant is produced in a rotating reactor and whereiri shear stress and centrifugal force are applied to the thin film.

3. The reaction method according to claim 2,
wherein the reactor comprises a pair of outer and inner concentric tubes, the inner tube having through-holes provided on the side thereof, and the outer tube having an end plate at an opening thereof,
wherein the reactant in the inner tube is caused, by centrifugal force generated from the rotation of the inner tube, to pass through the through-holes to the inside wall of the outer tube so that a thin film containing the reactant is produced on the inside wall of the outer tube, and
wherein shear stress and centrifugal force are applied to the thin film so that the chemical reaction is accelerated.

4. The reaction method according to claim 2 or 3, wherein the thin film is 5 mm or less in thickness.

5. The reaction method according to claims 3 or 4, wherein the centrifugal force to be applied to the reactant inside the inner tube of the reactor is 1500 N (kgms⁻²) or greater.

## Patentansprüche

1. Umsetzungsverfahren zum Beschleunigen einer chemischen Reaktion in der Flüssigphase, wobei mechanische Energien sowohl von Scherspannung als auch von Zentrifugalkraft gleichzeitig im Laufe der chemischen Reaktion auf ein Metallsalz und Kohlenstoff in einem Rotationsreaktor angewendet werden, und
die mechanischen Energien in chemischen Energien umgewandelt werden, was zur Beschleunigung der chemischen Reaktion führt,
zum Dispergieren des Kohlenstoffes und der Metalloxidnanopartikel, die in der chemischen Reaktion erzeugt werden;
wobei der erzeugte Kohlenstoff die Metalloxidnanopartikel in einem stark dispergierten Zustand trägt und als eine Elektrode betrieben wird, und
wobei die chemische Reaktion eine Hydrolysereaktion oder eine Kondensationsreaktion von metallischem Salz in einem Lösungsmittel ist.

2. Umsetzungsverfahren nach Anspruch 1 zum Beschleunigen der chemischen Reaktion, wobei ein Dünnfilm, der ein Reaktionsmittel enthält, in einem Rotationsreaktor erzeugt wird und wobei Scherspannung und Zentrifugalkraft auf den Dünnfilm angelegt werden.

3. Umsetzungsverfahren nach Anspruch 2,
wobei der Reaktor ein Paar von konzentrischen Außen- und Innenrohren umfasst,
wobei das Innenrohr an der Seite davon bereitgestellte Durchgangslöcher aufweist und das Außenrohr eine Endplatte an einer Öffnung davon aufweist,
wobei verursacht wird, dass das Reaktionsmittel in dem Innenrohr durch Zentrifugalkraft, die durch die Drehung des Innenrohres erzeugt wird, die Durchgangslöcher zu der Innenwand des Außenrohres durchläuft, sodass ein Dünnfilm, der das Reaktionsmittel enthält, an der Innenwand des Außenrohres erzeugt wird, und
wobei Scherspannung und Zentrifugalkraft auf den Dünnfilm angelegt werden, sodass die chemische Reaktion beschleunigt wird.

4. Umsetzungsverfahren nach Anspruch 2 oder 3, wobei der Dünnfilm eine Dicke von 5 mm oder weniger aufweist.

5. Umsetzungsverfahren nach Anspruch 3 oder 4, wobei die auf das Reaktionsmittel innerhalb des Innenrohres des Reaktors anzulegende Zentrifugalkraft 1'500 N (kgms⁻²) oder mehr beträgt.

## Revendications

1. Procédé de réaction visant à accélérer une réaction chimique en phase liquide, dans lequel des énergies mécaniques à la fois de contrainte de cisaillement et de force centrifuge sont appliquées à un sel de métal et du carbone dans un réacteur en rotation en même temps au cours de la réaction chimique, et
les énergies mécaniques sont converties en énergies chimiques, aboutissant à une accélération de la réaction chimique,
pour disperser le carbone et les nanoparticules d'oxyde de métal produites dans la réaction chimique;
le carbone produit porte des nanoparticules d'oxyde de métal dans un état hautement dispersé et est exploité comme une électrode, et
dans lequel la réaction chimique est une réaction d'hydrolyse ou une réaction de condensation de sel métallique dans un solvant.

2. Procédé de réaction selon les revendications 1, visant à accélérer la réaction chimique, dans lequel un film fin contenant un réactif est produit dans un réacteur en rotation et dans lequel une contrainte de cisaillement et une force centrifuge sont appliquées au film fin.

3. Procédé de réaction selon la revendication 2,
dans lequel le réacteur comprend une paire de tubes concentriques externe et interne, le tube interne ayant des trous traversants ménagés sur son côté, et le tube externe ayant une plaque d'extrémité au niveau d'une ouverture de celle-ci,
dans lequel le réactif dans le tube interne est amené, par une force centrifuge générée par la rotation du tube interne, à passer à travers les trous traversants vers la paroi intérieure du tube externe de sorte qu'un film fin contenant le réactif soit produit sur la paroi intérieure du tube externe, et
dans lequel une contrainte de cisaillement et une force centrifuge sont appliquées au film mince de sorte que la réaction chimique soit accélérée.

4. Procédé de réaction selon les revendications 2 ou 3, dans lequel le film fin est d'une épaisseur de 5 mm ou moins.

5. Procédé de réaction selon les revendications 3 ou 4, dans lequel la force centrifuge à appliquer au réactif à l'intérieur du tube interne du réacteur est de 1 500 N (kgms⁻²) ou plus.
